(19) Europäisches Patentamt
European Patent Office
Office européen des brevets

(11) **EP 3 763 510 B1**

(12) **EUROPEAN PATENT SPECIFICATION**

(45) Date of publication and mention
of the grant of the patent:
**01.01.2025 Bulletin 2025/01**

(51) International Patent Classification (IPC):
**B29C 53/08** (2006.01)   **B29C 53/00** (2006.01)
**B29C 53/84** (2006.01)   **B29L 23/00** (2006.01)
**B29K 21/00** (2006.01)   **B29K 101/12** (2006.01)

(21) Application number: **19185650.9**

(22) Date of filing: **11.07.2019**

(52) Cooperative Patent Classification (CPC):
**B29C 53/083; B29C 53/005; B29C 53/84;**
B29C 2793/0027; B29C 2793/0081;
B29K 2021/006; B29K 2101/12; B29L 2023/005

(54) **A METHOD OF MOUDING MULTI-LAYER HOSES WITH A VULCANIZED OUTER RUBBER OR GUM LAYER AND A DEVICE FOR PERFORMING IT**

VERFAHREN ZUM FORMEN VON MEHRSCHICHTIGEN SCHLÄUCHEN MIT EINER VULKANISIERTEN AUSSENKAUTSCHUK- ODER GUMMISCHICHT UND VORRICHTUNG ZUR DESSEN DURCHFÜHRUNG

PROCÉDÉ DE MOULAGE DE TUYAUX MULTICOUCHES AVEC UNE COUCHE EXTERNE VULCANISEÉ DE CAOUTCHOUC OU DE GOMME ET DISPOSITIF POUR SA MISE EN OEUVRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.01.2021 Bulletin 2021/02**

(73) Proprietor: **MSV SYSTEMS CZ s.r.o.**
**460 01 Liberec (CZ)**

(72) Inventors:
• **Barvinek, Marek**
**463 31 Bily Kostel nad Nisou (CZ)**

• **Tichy, David**
**463 03 Straz nad Nisou (CZ)**

(74) Representative: **Musil, Dobroslav**
**Dobroslav Musil a partneri s.r.o.**
**Zabrdovicka 11**
**615 00 Brno (CZ)**

(56) References cited:
**EP-A2- 3 372 381      DE-U1- 202013 100 888**
**JP-A- H05 169 557      JP-A- S6 141 524**

## Description

## Technical field

The invention relates to a method of shaping a multi-layer hose composed of an outer layer of vulcanized rubber or gum and an inner layer of a thermoformable material, and optionally composed of at least one intermediate layer between the outer layer and the inner layer, during which the hose is internally heated and then is inserted into a mould in which it is cooled, after which it is removed from the mould and the hose by its natural deformation changes its spatial arrangement determined by the mould into the final desired spatial arrangement.

The invention also relates to a device for performing the method of moulding a multi-layer hose, which comprises a mould in which a longitudinal shaping groove is formed whose cross-section profile is adapted to receive a heated hose for spatial shaping, whereby the mould has smaller radii for the individual bends of the hose than are the final desired radii of the individual bends of the hose and, furthermore, the mould has angles for the individual bends of the hose greater than the final desired angles of the individual bends of the hose.

## Background art

Multi-layer hoses are used in numerous industries, the outer layer of which is made of rubber or gum, hereinafter referred to as "rubber" (meaning either rubber or gum). Such a multi-layer hose further comprises at least one inner layer which is significantly thinner than the outer rubber layer, whereby this inner layer or these inner layers ensure resistance of the hose to substances passing through it. Typical application areas of multi-layer hoses with an outer rubber layer are the automotive industry and general transportation technology, where such multi-layer hoses are used to carry fuel, engine coolants, refrigerants in air conditioning units, are used in heating systems, etc. Specifically, these hoses are advantageous for their basic flexibility (which is, however, limited and therefore it is extremely to shape them in a car into the desired path between the other car components), and also for their high resistance both from the outer side, i.e. from the side of the outer rubber layer and the inner side, i.e. on the side of the substance that is conveyed through these hoses. However, many applications of multi-layer hoses with a rubber or gum outer layer in the automotive industry or in transportation technology, require the hose to be spatially shaped over its length before being mounted in a vehicle structure, often in a very complicated manner, so that the hose can be incorporated into the structure of the other parts of the automobile.

Document WO 01/81061 A1 (equivalent to document EP 1 286 813) discloses the shaping of hoses having two or more layers, especially for the automotive industry, which are designed for carrying fuel and other fluids in an automobile. The solution described in WO 01/81061A1 (EP1286813) consists in that the hose ends are secured by clamping means in the machine, whereby these clamps contain conduits for the intake and exhaust of a heating medium and cooling medium to the interior of the hose and also comprise closures for closing the interior of the hose after pressurizing the heating medium inside the hose, as will be described in more detail below. The machine further comprises a heating medium reservoir, a cooling medium reservoir and pumps for conveying both media through the interior of the hose, whereby the pump of the heating medium is adapted to pressurize the interior of the hose with the heating medium to a desired pressure value so that the heating medium can serve as an inner mandrel for subsequent hose shaping which ensures the stability of the hose shape even in bends. Both clamping means of the hose ends are mounted on a positioning device, whereby the length of the hose clamped between the two clamping means is associated with a system of forming benders, movable in the space. The hose clamped between the two clamping means is first heated from the inside by the passage of the heating medium to a temperature which enables to shape the entire hose, whereupon the inner space of the hose is pressurized with the heating medium and closed, so that the heating medium acts as an inner mandrel on the inner walls of the hose and allows retaining the circular cross-section of the hose even in bends. After being heated and pressurized, the hose which is still clamped by the ends in the clamping means is spatially shaped by the spatial movement of the clamping means and movable benders to assume the desired shape. Subsequently, the pressure of the heating medium from the interior of the hose is released and the cooling medium starts to flow into the inner space of the hose, thereby cooling the hose from the inside. After cooling, both ends of the hose are released from the clamping means and the shaped hose is removed from the machine as a finished product.

The disadvantages of the solution according to WO 01/81061 A1 consist first of all in the extreme complexity of the device, which must comprise a large number of spatially precisely movable nodes and benders, whereby in addition, the clamping means of the hose end must allow the intake and delivery of the heating medium and the cooling medium, as well as pressurizing the inner space of the hose with the heating medium to the required high pressure for the subsequent shaping process. Another drawback is the use of excess pressure of the heating medium inside the hose so as to retain the circular cross-section of the hose in bends, which is completely insufficient and unreliable and, what is more, there is a high risk of damage to the inner layers of the hose. A further disadvantage is the fact that the solution does not make provisions for the interaction of the individual layers of the hose, especially the effect of the thicker outer rubber layer on the final shape of the shaped hose.

Furthermore, known are processes for the spatial shaping of single-layer hoses, particularly of non-vulcanized rubber or gum, which are cold elastic, wherein in this state, applying some force, they are inserted into a mould in the form of a labyrinth in which the originally straight hose is brought into the desired shape. Subsequently, the thus preformed hose is heated to the required vulcanization temperature either from the inside by the action of hot steam, or from the outside (in a furnace or by infrared radiation, etc.). After that the hose is allowed to cool in the mould or is actively cooled in the mould, whereby the originally straight non-vulcanized rubber or gum hose permanently retains the spatial shape of the mould, since vulcanization of the rubber or gum takes place only after the hose has been fixed in the spatial shape of the mould. The disadvantage of these solutions is the necessity of using a hose with non-vulcanized outer rubber or gum, whereby the multi-layer hoses with a non-vulcanized outer rubber or gum layer are practically not produced. Moreover, the vulcanization temperature of the rubber or gum, which is significantly higher than the safe temperature for special inner layers of multi-layer hoses, would damage these special inner layers of multi-layer hoses.

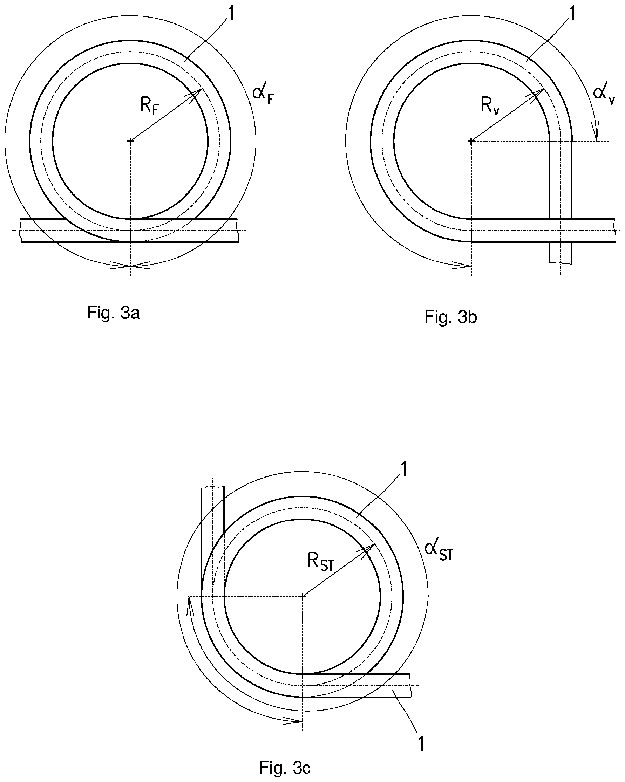

Also known is the spatial shaping of multi-layer hoses with an outer layer of vulcanized rubber or gum which are less elastic when cold. This type of hose is heated by external heating, an auxiliary mandrel is inserted because in the inner space of the hose already during the heating, serving to ensure the circular cross-section of the hose even after bending. The hose is heated, e.g., in a furnace or by a thermal radiator (IR radiator) to a temperature of about 145 ° C. The heated hose, which is now more elastic, by applying some force is inserted into the mould in the form of a labyrinth in which the originally straight multi-layer hose is brought into a shape which is significantly (fundamentally) different from the final desired hose shape, see Fig. 3c. Subsequently, the hose is left in the mould to cool or is actively cooled in the mould, and after removal of the hose from the mould, especially due to the elasticity of the outer rubber or gum layer, the shape of the hose changes considerably in contrast to the shape of the mould and assumes the final desired multi-layer hose shape.

However, the disadvantage of this solution is a very large change in the shape of the hose after its removal from the mould due to the impact of the outer rubber or gum layer, which requires extreme differences of the mould from the final form of the hose, extremely small radii and rounding between the individual sections of the mould for the correct final shaping of the individual sections of the finished hose. Therefore, it is very often practically impossible to realize the desired bends with the desired resulting radii, inclinations etc., especially if the ratio of the desired radius or transition or inclination or to the diameter of the shaped hose is unfavorable or too small. Furthermore, the internal heating of the hose cannot be applied here, because it would not be possible to use it together with the mandrel (it prevents heating the inner layer of the hose), or the inner layer of the hose would be damaged by the pressure of the spring mandrel on the wall of the inner layer of the hose.

JP H05 169557 A describes a method of manufacturing a molded hose using special apparatus. Flexible mandrel made of rubber or resin with the innermost inner resin layer is fed into the intermediate rubber tube layer extruder, and the intermediate rubber tube layer is continuously extruded and laminated on the outside of the inner resin layer. Then, this outer rubber layer is continuously extruded and laminated by the outer rubber layer extruder on the outer surface of the reinforcing layer to form a straight, long, non-vulcanized hose. The outer rubber layer is continuously extruded and laminated by the outer rubber layer extruder onto the outer reinforcement layer. The hose is then placed in an oven and vulcanized at a temperature of 159 degrees Celsius for 40 to 90 minutes, after which the mandrel is removed and the vulcanized hose body is formed. The long, vulcanized hose body thus obtained is then wound onto a winding drum of a containment device and stored therein. A sealing plug is attached to the end of the hose body and a pressurizing means equipped with a pressure regulator can be used to adjust the pressure of the hose body. The pressurizing means, equipped with an adjustable pressure regulator, pressurizes the inner plastic layer of the hose body from its rear end. A pressurizing pressure of 3.0 to 6.0 kgf/cm2 is preferred, since a pressure of 3.0 kgf/cm2 or less causes wrinkling of the resin in the inner resin layer, while a pressure of 6.0 kgf/cm2 or more expands the inner diameter of the hose body. After the pressurization is completed, the hose body is continuously and sequentially fed to the heating device while pulling the end of the hose body with a string or the like to soften the resin of the inner resin layer. For example, if the inner resin layer is made of nylon resin, it is heated at around 200° C for 5 to 10 minutes. At this time, the pressure inside the inner resin layer rises due to the heating, but the pressure regulator of the pressurizing means connected to the rear end of the hose body keeps the internal pressure constant, so that the resin surface inside the inner resin layer is always pressurized uniformly at a predetermined pressure, effectively preventing wrinkles from occurring. Next, the main body of the hose, which has been heated to the softening point, is supplied to the bending machine by pulling the end of the hose further. Then, when the sensor detects the hose body and further detects that the upper and lower molding positions are correct, the upper and lower cylinders are activated, the piston rod is extended, and the upper and lower molds sandwich the hose body from above and below and mold it. The molded hose body is then held by the upper and lower molds, which circulate and move along the loop guide by a chain drive or the like, and is automatically sent to the cooling means while still molded. In the same way, the heated hose body continuously delivered from the heating means is sequentially molded by a plurality of molds circulating and moving along the loop guide. When the cooling means detects the transported hose body by a sensor, it releases cooling water from the outlet provided at the end of the supply pipe to cool the hose body in the molded state. The cooling time should be at least minutes to obtain a sufficiently bent hose body. When the mold is transported to the end of the cooling process, the sensor detects and activates the cylinder, the piston rod contracts, and the mold is divided into upper and lower parts to release and demold the molded hose body. The molds, which have been divided into upper and lower parts, are transferred along the loop guide and the previous process is repeated again, and the demolded and freed hose body is continuously pushed through the guide roller into the stowage means and stowed sequentially. When all of the hose body that has been wound onto the winding drum has been unwound, a sensor located near the winding drum detects the end of the unwinding, and the pressure means, heating device, and bending device are stopped, and the automatic open/close valve is opened to remove the pressure from the hose body. Then, the hose body is removed from the winding drum of the accommodating device, the blind plug is removed, and the hose is cut to a fixed length using a fixed length cutter or the like not shown in the figure according to the required hose length to obtain a formed hose having a predetermined bend shape. In this way, the hose body is already vulcanized, and the pressure is applied inside the inner resin layer even before heating, and the pressure is constantly applied inside the inner resin layer until the demolding process is completed over the entire length of the hose body. At the same time, the upper and lower molds and both circulate to continuously sandwich and mold the hose body. The molded hose body is conveyed to the cooling means in the molded and sandwiched state, so that the hose body can be continuously and automatically molded.

Disadvantage of the JP H05 169557 A method and device is in necessity of using pressurized hose during whole process, using external heating for temperature higher than vulcanization temperature of the rubber, while due to external heating, the internal layer is heated only by heat transfer from outer space through both rubber layers to internal layer and the internal cavity of the hose is heated only by this heat transfer. Another disadvantage is necessity of the regulation of the internal pressure in the hose, which is dependent on temperature of the internal cavity of the hose etc. External heating of the hose also negatively affects final parameters of the rubber or gum layers of the hose. The method and device used is complicated and expensive and is usable for enough long hoses, not for short or semi-short pieces.

From JP S61 41524 A, EP 3 372 381 and DE 20 2013 100888 are known various moulds, in which is formed a longitudinal shaping groove, whose cross-section profile is adapted to receive a heated hose to be spatially shaped, whereby the mould has smaller radii for the individual bends of the hose than the final desired radii of the individual bends of the hose and, at the same time, the mould has greater angles for the individual bends of the hose than the final desired angles of the individual bends of the hose.

The aim of the invention is therefore to eliminate or at least minimize the disadvantages of the background art.

## Principle of the invention

The aim of the invention is by a method of shaping a multi-layer hose composed of an outer layer of vulcanized rubber or gum, and an inner layer of a thermoformable material, and optionally composed of at least one intermediate layer between the outer layer and the inner layer, whose principle consists in that the hose is straight and is shortened to required length, the cavity of the hose is connected to a source of a heating medium and the hose is then internally heated by the passage of the heating medium through the empty cavity of the hose, the heating is performed to the lowest bending softening temperature selected from the bending softening temperatures for the inner layer and intermediate layer, subsequently the hose is disconnected from the source of a heating medium and the hose is inserted into a individual rigid shaping mould, in the rigid shaping mould the hose acquires a spatial arrangement having radii of the individual bends of the hose determined by the rigid shaping mould and angles of the individual bends of the hose determined by the rigid shaping mould, whereupon the hose is tempered by placing the rigid shaping mould with the inserted hose in a tempering chamber for a suitable time and then the hose, still inserted in the rigid shaping mould, is cooled and subsequently the hose is removed from the rigid shaping mould, whereby the hose, after being removed from the rigid shaping mould, the hose due to the action of the outer layer and the inner layer and also the optional intermediate layers changes its spatial arrangement in such a manner that the radii of the individual bends of the hose <u>being</u> determined by the mould increase to the final desired radii of the individual bends of the hose, whereas the angles of the individual bends of the hose being determined by the mould decrease to the final desired angles of the individual bends of the hose.

The principle of the device for performing the method of moulding a multi-layer hoses according to any of claims 1 to 5 consists in that it comprises a rigid shaping mould, wherein the size of the mould radii for the individual bends of the hose and the size of the mould angles for the individual bends of the hose have values, whereby the decrease of the radii of the mould and the increase of the angles of the mould corresponds to the action of the outer layer and the inner layer and also the optional intermediate layers after removing the multi-layer hose from the mould and the rigid shaping mould is adapted for inserting the hose being previously internally heated by the passage of the heating medium through the empty cavity of the hose and the rigid shaping mould is further adapted for tempering the hose in the mould and for cooling the hose in the mould.

The present invention makes it possible to economically, easily and quickly spatially shape multi-layer hoses with a pre-vulcanized rubber or rubber outer layer, while achieving high quality and precision of the output products. Multi-layer hoses with pre-vulcanized rubber or gum outer layers are readily available since they are the final product of many manufacturers of such hoses and are affordable, whereby the invention eliminates the earlier need for additional vulcanization of the rubber or gum outer layer.

## Description of the drawings

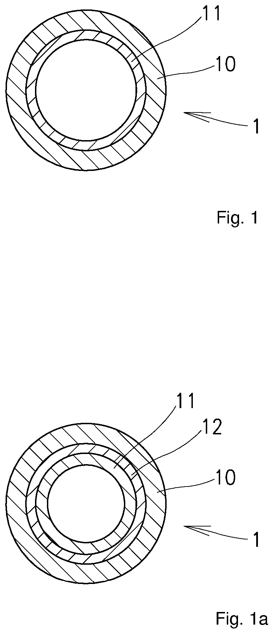

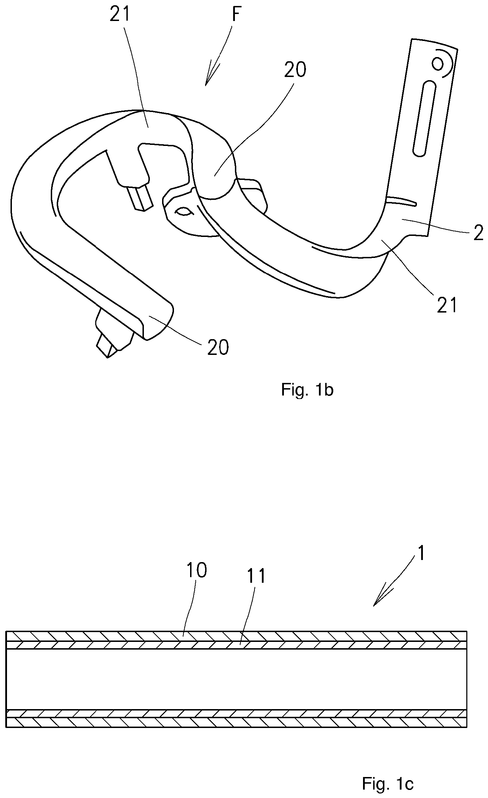

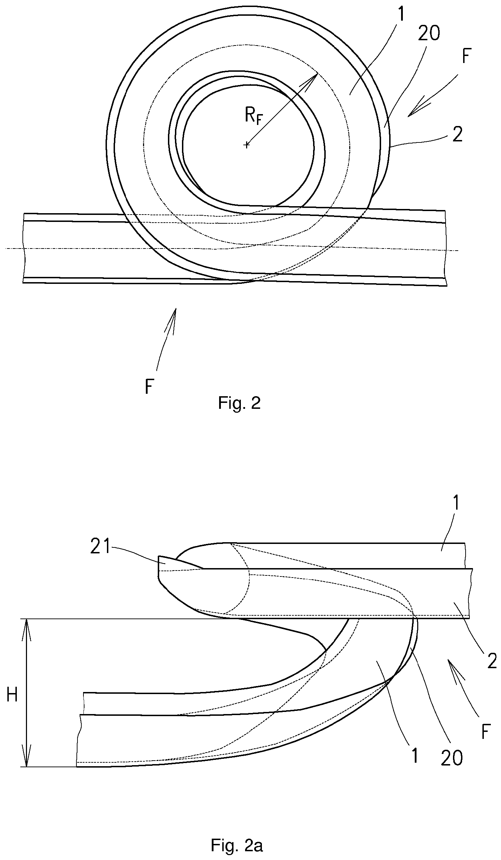

The invention is schematically represented in the drawings, wherein Fig. 1 shows a cross-section of a two-layer hose, Fig. 1a shows a cross-section of a three-layer hose, Fig. 1b is a perspective view of an example of a forming mould - a moulding labyrinth, Fig. 2 is a plan view of an exemplary embodiment of a part of the mould with a shaped hose, Fig. 2a is a side view of an exemplary embodiment of a part of a mould with a hose to be shaped of Fig. 2, Fig. 3a is a plan view of the shape of the hose in the mould according to the exemplary embodiment of Fig. 2, Fig. 3b is a plan view of the resulting shape of the shaped part of the hose after removal from the mould according to the embodiment of Fig. 2, and Fig. 3c is a plan view of the shape of the hose in the mould according to the background art.

## Examples of embodiment

The invention will be described with reference to an exemplary embodiment of a method of shaping a multi-layer hose comprising a vulcanized outer rubber or gum layer, and a device for performing it. If the word "rubber" or its derived forms is used in the following text, the word "gum" is also included in this meaning, and its derived forms. That means that if hereinafter only the word "gum" or its derived forms appears in the following text, it means automatically the same as the word "rubber" and its corresponding derived forms.

Fig. 1 shows a cross-section of a two-layer hose **1** which is composed of an outer layer **10** of vulcanized rubber or gum and an inner layer **11** of functional plastic for contact with the conveyed fluid, e.g. fuel, air conditioning refrigerant, heat carrier of car heating systems, etc. Typically, the inner layer **11** consists of a suitable type of polyamide or any other suitable plastic.

Fig. 1a shows a cross-section of a two-layer hose '**1** which is composed of an outer layer **10** of vulcanized rubber or gum and an inner layer **11** of a functional plastic for contact with the conveyed fluid, e.g. fuel, air conditioning refrigerant, heat carrier of car heating systems, etc. Typically, the inner layer **11** consists of a suitable type of polyamide or some other suitable plastic. At least one intermediate layer **12** is arranged between the outer layer **10** and the inner layer **11,** the intermediate layer **12** being made of a suitable plastic, especially plastic different from the material of the inner layer **11.**

Fig. 1b shows an example of a rigid mould **F** - a moulding labyrinth, which comprises a spatially shaped longitudinal body 2 in which a longitudinal shaping groove **20** is formed, whose cross-section profile is adapted to receive a heated hose **1** to be spatially shaped. The longitudinal shape and the spatial arrangement of the groove **20** corresponds to the spatial arrangement of the longitudinal body **2** and it is also adapted to shape the multi-layer hoses **1** into the desired shape after removal of the hose **1,** as will be described in greater detail hereinafter. The mould **F** is is made either as one-piece or multi-piece. The mould **F** is produced by a suitable technology, e.g. by cutting from a bent steel tube, 3D printing, machining, cutting or milling the groove **20** in a block of material, etc., or is made by a combination of two or more technologies, etc. The mould **F** is adapted to hold the shaped hose **1** in the groove **20,** e.g., by means of flaps **21** arranged appropriately along the length of the mould **F,** whereby despite the presence of the flaps **21,** the groove **20** is capable of accommodating the heated hose **1** to be shaped by inserting it from the outer side of the groove **20.** The mould **F** further comprises on its inner side a contact wall **20** with a shaped tube, whereby the contact wall **20** is a functional shape wall **20** of the labyrinth **2** which determines the shape of the hose to be shaped.

Fig. 1c shows a longitudinal section through a multi-layer, here a two-layer hose **1,** which is composed of an outer layer **10** of vulcanized rubber or gum and an inner layer **11** of functional plastic for contact with the conveyed fluid.

Fig. 2 shows a plan view of an example of a shaping section of the mould **F** for shaping the multi-layer hose **1**, wherein the shaped hose **1** is inserted in mould **F,** i.e. the shaped hose **1** is inserted in its longitudinal shaping groove **20** according to the invention. The example of the shaping section **F** shown here represents a helical bending of the shaping groove **20** with a corresponding **rise H** between the two parallel straight parts of the shaping groove **20,** as can be better seen in Fig. 2a, which shows a side view of an exemplary embodiment of a shaping section of the mould **F** for shaping the multi-layer hose **1** of Fig. 2.

Fig. 3a shows a plan view of the shaped hose **1**, in which the hose **1** is situated in the shaping groove **20** of the mould **F,** i.e. in the state when the shaped hose **1** is inserted in the mould **F**. In this state, the shaped multi-layer hose **1** is arranged in the shaping groove **20** of the mould **F** in a curvature having a radius $r_F$ and an angle $\alpha_F$ 360°.

Fig. 3b shows a plan view of the shaped hose **1,** after being removed from the mould groove **20** of the mould **F** after moulding, i.e. in the state when the moulded hose **1** is removed from the mould **F,** when the outer layer **10** of vulcanized rubber or gum, due to its elasticity caused by vulcanization before the shaping process according to the present invention begins, acts against retaining the bend formed, whereas the inner layer **11** and also the optional intermediate layers **12,** act to preserve the bend formed. As a result of this counter synergistic activity of the outer layer **10** and the inner layer **11** and, also optional intermediate layers **12,** the bend radius $r_F$ of the hose **1** determined by the mould **F** is increased to the final desired bend radius $r_V$ of the hose **1**, while the angle $\alpha_F$ of the bend determined by the mould **F** is decreased to the final desired angle $\alpha_V$ of the bend of the hose **1**.

Fig. 3c shows a plan view of the hose **1** shaped according to the background art mentioned in the previous text. In this background art, in order to obtain the same final bend radius $r_V$ of the hose **1** and the same final desired angle $\alpha_V$ of the bend of the hose **1,** as is shown in Fig. 3b and as is achieved according to the present invention, the hose must be in the mould **F,** whose longitudinal groove **20** for shaping the hose **1** will form the hose **1** in such a manner that it will have a bend radius $r_{ST}$ which is considerably smaller than radius $r_F$ according to Fig. 3a of this invention and, what is more, the angle $\alpha_{ST}$ of the bend of the hose **1** bend must be according to the above-mentioned background art considerably greater than the angle $\alpha_F$ of the bend of the hose **1** according to Fig. 3a of this invention.

Accordingly, according to Figs. 3a, 3b and 3c, it applies that:

$$r_{ST} < r_F < r_V$$

and

$$\alpha_{ST} > \alpha_F > \alpha_V.$$

The shaping of the multi-layer hose **1** according to the present invention is performed in such a manner that a straight multi-layer hose **1** with a rubber or gum outer layer **10** is used as a "starting semi-finished product", this outer layer **10** being fully vulcanized from the initial production of the multi-layer hose **1**. This starting semi-finished product is shortened to the required length. The multi-layer hose **1** thus prepared is connected by its empty cavity, i.e. a cavity without a support mandrel, to a source of a heating medium, whereupon the internal heating of the hose **1** is started by the passage of the heating medium through the cavity of the hose **1**. The hose **1 is** internally heated to the softening temperature of the inner layer **11** of the hose **1** for bending, regardless of the temperature value of the rubber or gum outer layer **10** of the hose **1**. If the hose **1** has an inner layer **11** and also at least one intermediate layer **12,** the hose **1** is heated internally to the softening temperature of the inner layer **11** or the intermediate layer **12,** which is the most temperature sensitive layer, i.e. the layer **11, 12,** which exhibits the lowest softening temperature for bending. Obviously, the other layers **11, 12** and, ultimately, also the outer layer **10** are heated to a temperature that does not reach the ideal softening temperature of the respective layer **11, 12** for bending. Indeed, if any one of the intermediate layers **12** or the inner layer **11** were heated to a temperature higher than their softening temperature for bending, that would cause thermal damage to the layer **11, 12** and the layer **11, 12** would be damaged during the bending of the hose **1**, which would lead to deterioration of the quality of the entire bent hose **1**. In principle, it can be therefore summarized that the hose **1** is heated internally to the lowest softening temperature for the bending of the inner layer **11** or the optional intermediate layers **12** depending on the specific material of the inner layer **11** and the intermediate layers **12.**

Thus, before the actual bending of the hose **1** according to the invention, i.e. before starting the internal heating of the hose **1**, the softening temperatures for the bending of the individual layers are determined first from the material composition of the individual layers **11**, **12** of the hose **1** and the lowest bending softening temperature is selected from these temperatures and this lowest bending softening temperature is used as the internal heating temperature of the hose **1**. Current knowledge of the inventors indicates that this lowest softening temperature for the inner layer **11** as well as for the intermediate layers **12** is always substantially lower than the softening temperature for bending the rubber or gum outer layer **10** of the hose **1,** so there is no need to include in the selection the lowest temperatures as well as the softening temperature for bending the outer layer **10** of the hose **1**. However, for the sake of the completeness of the material characteristics of the hose **1**, it is advisable to know also this temperature. Under the present conditions, with regard to the material composition of multi-layer hoses for the automotive industry and transportation technology and with regard to economic viability of the manufacturing process, the internal heating time of the hose **1** is in the range of 10 to 30 minutes, preferably in the range of 15 to 25 minutes, ideally "about" 20 minutes, or 20 minutes. Furthermore, it appears that for internal heating it is advantageous to use flowing hot air or hot water or hot steam or superheated steam.

As a result of internal heating, the stiffness of the inner layer as well as of that of any intermediate layers 12 is reduced 11 and the tension on these layers 11, 12 from the production of the hose 1 with a vulcanized rubber or gum outer layer 10 is released, whereupon the internally heated hose 1 is disconnected from the heating device and is inserted, manually or mechanically, into the mould F. If necessary, after the hose 1 is internally heated and before it is inserted into the rigid shaping mould F, a mechanical support mandrel is inserted into the hose 1, which is either left in the hose 1 for the whole period of forming in the mould F or which is removed gradually during subsequent insertion of the hose 1 into the mould F.

Subsequently, the hose 1 in the mould F is tempered and cooled. The tempering is carried out by placing the mould F with the inserted hose 1 in a tempering chamber (not shown), in which the tempering temperature is again maintained depending on whether it is the inner layer 11 or the optional intermediate layer 12 (or intermediate layers 12) that is more temperature sensitive. Tempering takes place for a suitable time. After tempering, the hose in the mould is cooled, either by leaving it in the air or by applying coolant or cooling air, either on the outer and/or inner surface of the hose 1, because the cavity of the hose 1 inserted in the mould F is still accessible for connection to the inlet of the cooling medium. Alternatively, tempering is performed in such a manner that the temperature in the tempering chamber gradually decreases, whereby this gradual decrease in the temperature is slower than the above-mentioned cooling in the air or cooling by air or by a cooling medium. Since the forming mould F is relatively inexpensive, a plurality of identical moulds F are available so that the hoses 1 are heated gradually or batchwise. After that they are separately inserted into the individual moulds F, in which they separately cool or are separately cooled. After cooling, the hose 1 is removed from the mould F and the mould F returns to the outlet of the hoses 1 from the heating device so that a new heated hose 1 can be inserted. The hose 1, which has been removed from the mould F, changes its shape determined by the mould F due to the action of the outer layer 10 of pre-vulcanized rubber or gum and the inner layer 11 and also the optional intermediate layers 12 in such a manner that the radii $r_F$ of the individual bends of the hose 1 which are determined by the mould F increase to the final desired radii $r_v$ of the individual bends of the hose 1, whereas the angles $\alpha_F$ of the individual bends of the hose 1 which are determined by the mould F decrease to the final desired angles $\alpha_v$ of the individual bends of the hose 1_. The thus spatially shaped hose 1 henceforth retains its altered (deployed) spatial arrangement.

As can be seen in Figs. 3a and 3b, the mould F has therefore the individual radii $r_F$ for the individual bends of the hose 1 smaller than the final desired radii $r_v$ of the individual bends of the hose 1 and, at the same time, the mould F has angles $\alpha_F$ for the individual bends of the hose 1 greater than the final desired angles $\alpha_v$ of the individual bends of the hose 1, whereby the decrease of the radii $r_F$ for the individual bends of the hose 1 and the increase of the angles $\alpha_F$ for the individual bends of the hose 1 corresponds to the synergistic effect of the outer layer 10 of pre-vulcanized rubber or gum and the inner layer 11 and the optional intermediate layers 12 to the final desired radii $r_v$ of the individual bends of the hose 1 and the final desired angles $\alpha_v$ of the individual bends of the hose 1 and to the final shape of the shaped hose 1_. In other words, the decrease of the radii $r_F$ for the individual bends of the hose 1 and the increase of the angles $\alpha_F$ for the individual bends of the hose 1 is determined by the synergistic effect of the outer layer 10 of pre-vulcanized rubber or gum and the inner layer 11 and the optional intermediate layers 12 on the final desired radii $r_v$ of the individual bends of the hose 1 and the final desired angles $\alpha_v$ of the individual bends of the hose 1 and on the final shape of the shaped hose 1.

## Industrial applicability

The invention is applicable in series production of spatially shaped multi-layer hoses with an outer layer of pre-vulcanized rubber or gum and with an inner layer made of plastic, especially PA, and optionally also with an intermediate layer, especially for use in the automotive industry and transportation technology.

## Claims

1. A method of shaping a multi-layer hose (1) composed of an outer layer (10) of vulcanized rubber or gum, and an inner layer (11) of a thermoformable material, and optionally composed of at least one intermediate layer (12) between the outer layer (10) and the inner layer (11), during which the hose (1) is internally heated, then inserted into a mould (F) in which it is cooled and after that it is removed from the mould and the hose (1), by its natural deformation, changes its spatial arrangement determined by the mould (F) into the final desired spatial arrangement, wherein the hose (1) is a straight and is shortened to required length, then cavity of hose (1) is connected to a source of a heating medium and the hose (1) is then internally heated by the passage of the heating medium through the empty cavity of the hose (1), the heating is performed to the lowest softening temperature selected from the softening temperatures for the bending of the inner layer (11) and the optional intermediate layer (12), subsequently the cavity of the hose (1) is disconnected from the source of a heating medium and the hose (1) is inserted into a individual rigid shaping mould (F), in the rigid shaping mould (F) the hose (1) is brought into a spatial arrangement with radii ($r_F$) of the individual bends of the hose (1) determined by the rigid shaping mould (F) and with the angles ($\alpha_F$) of the individual bends of the hose (1) determined by the rigid shaping mould (F), whereupon the hose (1) is tempered by placing the rigid shaping mould (F) with the inserted hose (1) in a tempering chamber for a suitable time and then the hose (1), still inserted in the rigid shaping mould (F), is cooled and subsequently the hose (1) is removed from the rigid shaping mould (F), whereby after removal from the rigid shaping mould (F), the hose (1) due to the action of the outer layer (10) and the inner layer (11) and also the optional intermediate layers (12) changes its spatial arrangement in such a manner that the radii ($r_F$) of the individual bends of the hose (1) being determined by the mould (F) increase to the final desired radii ($r_v$) of the individual bends of the hose (1), wherein the angles ($\alpha_F$) of the individual bends of the hose (1) being determined by the mould (F) decrease to the final desired angles ($\alpha_V$) of the individual bends of the hose (1).

2. The method according to Claim 1, **characterized in that** before starting the internal heating of the hose (1), the softening temperatures for the bending of the individual layers (10, 11, 12) are determined from the material composition of the individual layers (10, 11, 12) of the hose (1) and from these temperatures is selected the lowest softening temperature for bending and this lowest bending softening temperature is used as the internal heating temperature of the hose (1).

3. The method according to Claim 1 or 2, **characterized in that** the internal heating of the hose (1) is performed for a period ranging from 10 to 30 minutes, preferably for 15 to 25 minutes or ideally for 20 minutes.

4. The method according to any of claims 1 to 3, **characterized in that** the internal heating of the hose (1) is performed by hot air or hot water or hot steam or superheated steam.

5. The method according to any of claims 1 to 4, **characterized in that** cooling the hose (1) in the mould (F) is performed either by leaving it in the air or by applying coolant or cooling air, either to the outer and/or inner surfaces of the hose (1).

6. The device for performing the method of shaping multi-layer hoses (1) according to any of claims 1 to 5, which comprises a rigid shaping mould (F), in which is formed a longitudinal shaping groove (20), whose cross-section profile is adapted to receive a heated hose (1) to be spatially shaped, whereby the mould (F) has smaller radii (r) for the individual bends of the hose (1) than the final desired radii (rv) of the individual bends of the hose (1) and, at the same time, the mould (F) has greater angles ($\alpha$) for the individual bends of the hose (1) than the final desired angles ($\alpha_V$) of the individual bends of the hose (1), wherein the radii (r) of the mould (F) for the individual bends of the hose (1) and the angles ($\alpha$) of the mould (F) for the individual bends of the hose (1) have values ($r_F$, $\alpha_F$), whereby the decrease of the radii ($r_F$) of the mould (F) and the increase of the angles ($\alpha_F$) of the mould (F) corresponds to the action of the outer layer (10) and the inner layer (11) and also the optional intermediate layers (12) after removing the multi-layer hose (1) from the mould (F) and the rigid shaping mould (F) is adapted for inserting the hose (1) being previously internally heated by the passage of the heating medium through the empty cavity of the hose (1) and the rigid shaping mould (F) is further adapted for tempering the hose (1) in the mould (F) and for cooling the hose (1) in the mould (F).

7. The device according to Claim 6, **characterized in that** the rigid shaping mould (F) comprises multi-piece shaping groove (20).

**Patentansprüche**

1. Verfahren zum Formen eines mehrschichtigen Schlauchs (1), der aus einer Außenschicht (10) aus vulkanisiertem Kautschuk oder Gummi und einer Innenschicht (11) aus einem wärmeformbaren Material und optional aus mindestens einer Zwischenschicht (12) zwischen der Außenschicht (10) und der Innenschicht (11) besteht, bei dem der Schlauch (1) von innen erwärmt wird, dann in eine Form (F) eingelegt wird, in der er abkühlt, und dann aus der Form entnommen wird, und der Schlauch (1 ) ändert durch seine natürliche Verformung seine durch die Form (F) bestimmte räumliche Anordnung in eine endgültige räumliche Soll-Anordnung, **wo** der Schlauch (1) gerade ist und auf eine gewünschte Länge gekürzt wird, dann wird der Hohlraum des Schlauchs (1) an eine Heizmediumquelle angeschlossen und der Schlauch (1) wird dann von innen erwärmt, indem das Heizmedium durch den leeren Hohlraum des Schlauches (1) geleitet wird, wobei die Erwärmung auf die niedrigste Erweichungstemperatur erfolgt, die aus den Erweichungstemperaturen zum Biegen der Innenschicht (11) und der optionalen Zwischenschicht (12) ausgewählt wird, dann wird der Hohlraum des Schlauchs (1) von der Heizmediumquelle getrennt und der Schlauch (1) wird in eine separate starre Formgebungsform (F) eingelegt, in der starren Formgebungsform (F) wird der Schlauch (1) in eine räumliche Anordnung mit den durch die starre Formgebungsform (F) bestimmten Radien ($r_F$) der einzelnen Biegungen des Schlauchs (1) und mit den durch die starre Formgebungsform (F) bestimmten Winkeln ($\alpha_F$) der einzelnen Biegungen des Schlauchs (1) gebracht, woraufhin der Schlauch (1) temperiert wird, indem die starre Formgebungsform (F) mit dem eingelegten Schlauch (1) für eine geeignete Zeit in eine Temperierkammer gelegt wird und dann der Schlauch (1), noch in der starren Formgebungsform (F) eingelegt, wird abgekühlt und anschließend wird der Schlauch (1) aus der starren Formgebungsform (F) entnommen, wobei der Schlauch (1) nach der Entnahme aus der starren Formgebungsform (F) durch die Wirkung der Außenschicht (10) und der Innenschicht (11) sowie der optionalen Zwischenschichten (12) seine räumliche Anordnung so ändert, dass die durch die Form (F) bestimmten Radien ($r_F$) der einzelnen Biegungen des Schlauchs (1) auf die endgültigen Soll-Radien ($r_v$) der einzelnen Biegungen des Schlauchs (1) vergrößert werden, während die durch die Form (F) bestimmten Winkel ($\alpha_F$) der einzelnen Biegungen des Schlauchs (1) auf die endgültigen Soll-Winkel ($\alpha_V$) der einzelnen Biegungen des Schlauchs (1) verringert werden.

2. Verfahren nach dem Anspruch 1, **dadurch gekennzeichnet, dass** vor dem Beginn der Innenerwärmung des Schlauchs (1) die Erweichungstemperaturen zum Biegen aus der Materialzusammensetzung der einzelnen Schichten (10, 11, 12) des Schlauchs (1) ermittelt werden und aus diesen Temperaturen die niedrigste Erweichungstemperatur zum Biegen ausgewählt wird und diese niedrigste Erweichungstemperatur zum Biegen als die Temperatur der Innenerwärmung des Schlauchs (1) verwendet wird.

3. Verfahren nach dem Anspruch 1 oder 2, **dadurch gekennzeichnet, dass** die Innenerwärmung des Schlauchs (1) für 10 bis 30 Minuten, vorzugsweise 15 bis 25 Minuten oder idealerweise 20 Minuten erfolgt.

4. Verfahren nach einem der Ansprüche 1 bis 3, **dadurch gekennzeichnet, dass** die Innenerwärmung des Schlauchs (1) durch Heißluft oder Heißwasser oder Heißdampf oder überhitzten Dampf erfolgt.

5. Verfahren nach einem der Ansprüche 1 bis 4, **dadurch gekennzeichnet, dass** die Kühlung des Schlauchs (1) in der Form (F) entweder durch Belassen an der Luft oder durch Verwendung einer Kühlflüssigkeit oder einer Kühlluft erfolgt, und zwar auf die Außen- und/oder Innenoberflächen des Schlauchs (1).

6. Einrichtung zur Durchführung des Verfahrens zum Formen von mehrschichtigen Schläuchen (1) nach einem der Ansprüche 1 bis 5, die eine feste Formgebungsform (F) aufweist, in der eine Längsformnut (20) gebildet wird, deren Querprofil zur Aufnahme des erwärmten Schlauches (1) angepasst ist, der räumlich geformt werden soll, wobei die Form (F) kleinere Radien (r) der einzelnen Biegungen des Schlauchs (1) als die endgültigen Soll-Radien (rv) der einzelnen Biegungen des Schlauchs (1) aufweist und gleichzeitig weist die Form (F) größere Winkel ($\alpha$) der einzelnen Biegungen des Schlauchs (1) als die endgültigen Soll-Winkel ($\alpha_V$) der einzelnen Biegungen des Schlauchs (1) auf, wo die Radien (r) der Form (F) für die einzelnen Biegungen des Schlauchs (1) und die Winkel ($\alpha$) der Form (F) für die einzelnen Biegungen des Schlauchs (1) die Werte ($r_F$, $\alpha_F$) aufweisen, wobei die Verringerung der Radien ($r_F$) der Form (F) und die Vergrößerung der Winkel ($\alpha_F$) der Form (F) der Wirkung der Außenschicht (10) und der Innenschicht (11) sowie der optionalen Zwischenschichten (12) nach der Entnahme des mehrschichtigen Schlauchs (1) aus der Form (F) entsprechen und die starre Formgebungsform (F) zum Einlegen des Schlauchs (1) angepasst ist, der zuvor durch Hindurchleiten des Heizmediums durch den leeren Hohlraum des Schlauchs (1) innen erwärmt wurde, und die starre Formgebungsform (F) weithin zum Temperieren des Schlauchs (1) in der Form (F) und zum Abkühlen des Schlauchs (1) in der Form (F) angepasst ist.

7. Einrichtung nach dem Anspruch 6, **dadurch gekennzeichnet, dass** die starre Formgebungsform (F) eine mehrteilige Formnut (20) aufweist.

**Revendications**

1. Procédé de formation d'un tuyau multicouche (1) comprenant une couche extérieure (10) en caoutchouc vulcanisé ou en caoutchouc et une couche intérieure (11) en matériau thermoformable, et éventuellement au moins une couche intermédiaire (12) entre la couche extérieure (10) et la couche intérieure (11), lors duquel le tuyau (1) est chauffé de l'intérieur, puis inséré dans le moule (F) dans lequel il refroidit, et une fois retiré du moule, la disposition spatiale du tuyau (1) déterminée par le moule (F) est modifiée par déformation naturelle pour obtenir la disposition spatiale finale souhaitée, où le tuyau (1) est droit et raccourci à la longueur souhaitée ; la cavité du tuyau (1) est ensuite connectée à une source de fluide chauffant et le tuyau (1) est alors chauffé de l'intérieur en faisant passer le fluide chauffant à travers la cavité vide du tuyau (1), tandis que le chauffage est effectué à la température de ramollissement la plus basse sélectionnée parmi les températures de ramollissement pour le pliage de la couche intérieure (11) et de la couche intermédiaire optionnelle (12), après quoi la cavité du tuyau (1) est déconnectée de la source du fluide chauffant et le tuyau (1) est inséré dans un moule (F) individuel et rigide ; dans le moule rigide (F) le tuyau (1) est placé dans un espace dont les rayons ($r_F$) des différentes courbures du tuyau (1) sont déterminés par le moule (F) rigide et les angles ($\alpha_F$) des différentes courbures du tuyau (1) sont déterminés par le moule (F) rigide, le tuyau (1) est ensuite tempéré en plaçant le moule (F) rigide avec le tuyau inséré (1) dans la chambre de tempérage pour une durée appropriée, puis le tuyau (1), toujours inséré dans le moule (F) rigide, est refroidi et ensuite le tuyau (1) est retiré du moule rigide (F) ; après le retrait du moule rigide (F), le tuyau (1) modifie sa disposition spatiale sous l'action de la couche extérieure (10) et de la couche intérieure (11) ainsi que des couches intermédiaires optionnelles (12), de sorte que les rayons ($r_F$) des différentes courbures du tuyau (1) déterminés par le moule (F) soient augmentés jusqu'aux rayons ($r_V$) finaux souhaités des différentes courbures du tuyau (1), tandis que les angles ($\alpha_F$) des différentes courbures du tuyau (1) déterminés par le moule (F) soient réduits jusqu'aux angles ($\alpha_V$) finaux souhaités des différentes courbures du tuyau (1).

2. Procédé selon la revendication 1, **caractérisé en ce qu'**avant de commencer le chauffage de l'intérieur du tuyau (1), les températures de ramollissement pour le pliage sont déterminées à partir de la composition du matériau des différentes couches (10, 11, 12) du tuyau (1) et la température de ramollissement la plus basse pour le pliage est sélectionnée parmi ces températures et cette température de ramollissement la plus basse pour le pliage est utilisée comme température pour le chauffage de l'intérieur du tuyau (1).

3. Procédé selon la revendication 1 ou 2, **caractérisé en ce que** le chauffage de l'intérieur du tuyau (1) est effectué pendant 10 à 30 minutes, de préférence 15 à 25 minutes ou idéalement 20 minutes.

4. Procédé selon l'une des revendications de 1 à 3, **caractérisé en ce que** le chauffage de l'intérieur du tuyau (1) est effectué avec de l'air chaud, de l'eau chaude, de la vapeur chaude ou de la vapeur surchauffée.

5. Procédé selon l'une des revendications de 1 à 4, **caractérisé en ce que** le refroidissement du tuyau (1) dans le moule (F) est effectué soit en le laissant exposé à l'air, soit en appliquant un agent de refroidissement ou de l'air de refroidissement sur les surfaces extérieures et/ou intérieures du tuyau (1).

6. Dispositif pour la mise en oeuvre d'un procédé de formation d'un tuyau multicouche (1) selon l'une des revendications de 1 à 5, comprenant un moule (F) rigide dans lequel est formée une rainure de moulage longitudinale (20) dont le profil transversal est adapté pour recevoir un tuyau (1) chauffé, destiné à être formé dans l'espace, tandis que le moule (F) présente des rayons (r) des courbures individuelles du tuyau (1) plus petits que les rayons (rv) finaux souhaités des courbures individuelles du tuyau (1), et en même temps le moule (F) présente des angles ($\alpha$) des courbures individuelles du tuyau (1) plus grands que les angles ($\alpha_V$) finaux souhaités des courbures individuelles du tuyau (1), où les rayons (r) du moule (F) pour les courbures individuelles du tuyau (1) et les angles ($\alpha$) du moule (F) pour les courbures individuelles du tuyau (1) ont des valeurs ($r_F$, $\alpha_F$), tandis que la diminution des rayons ($r_F$) du moule (F) et l'augmentation des angles ($\alpha_F$) du moule (F) correspondent à l'action de la couche extérieure (10) et de la couche intérieure (11) ainsi que des couches intermédiaires optionnelles (12) après le retrait du tuyau (1) multicouche du moule (F) et où le moule rigide (F) est adapté à l'insertion du tuyau (1) préalablement chauffé de l'intérieur par le passage du fluide chauffant par la cavité vide du tuyau (1) et le moule (F) rigide est en outre adapté pour tempérer le tuyau (1) dans le moule (F) et pour refroidir le tuyau (1) dans le moule (F).

7. Dispositif selon la revendication 6, **caractérisé en ce que** le moule rigide (F) comprend une rainure de moulage composée de plusieurs parties (20).

Fig. 1

Fig. 1a

Fig. 1b

Fig. 1c

Fig. 2

Fig. 2a

Fig. 3a

Fig. 3b

Fig. 3c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0181061 A1
- EP 1286813 A
- JP H05169557 A

- JP S6141524 A
- EP 3372381 A
- DE 202013100888